# EUROPÄISCHE PATENTSCHRIFT

(11) **EP 3 456 630 B1**
(45) Veröffentlichungstag und Bekanntmachung des Hinweises auf die Patenterteilung: **14.08.2024**
(21) Anmeldenummer: 17191448.4
(22) Anmeldetag: 15.09.2017
(51) Int. Cl.: B64C 31/06, B63H 9/06, B64F 1/14

(54) **KITESYSTEM**
KITE SYSTEM
SYSTÈME D'AILE

(43) Veröffentlichungstag der Anmeldung: 20.03.2019
(73) Patentinhaber: SkySails Power GmbH, 20357 Hamburg (DE)
(72) Erfinder: Specht, Bernd, 22765 Hamburg (DE); Paulig, Xaver, 22769 Hamburg (DE); Reusch, Bastian, 28560 Lübeck (DE)
(74) Vertreter: Glawe, Delfs, Moll

(56) Entgegenhaltungen:
- WO-A1-2016/150561
- DE-U1- 202011 104 335
- US-A1- 2004 159 747

## Beschreibung

Die Erfindung betrifft ein Kitesystem mit einem Kite und einem Zugseil. Das Zugseil erstreckt sich zwischen dem Kite und einem Holepunkt am Boden.

Bei einem solchen Kitesystem kann der Kite frei ausfliegen, wobei der Abstand zum Holepunkt durch die Länge des Zugseils definiert ist. Wenn das Zugseil reißt, kann der Kite seine Flugbahn verlassen und unter Umständen weit entfernt von dem zugedachten Flugraum auf dem Boden aufschlagen. Dies kann eine Gefährdung darstellen.

Dokument WO 2016/150561 A1 stellt ein Fluggerät für ein Windkraftwerk vor, wobei in einem Zugseil ein Punkt geringerer Widerstandskraft in der Nähe des Fluggeräts angeordnet sein kann, um eine Sollbruchstelle in dem Zugseil herzustellen. Dokument US 2004/159747 A1 stellt eine Kite-Lenkstange mit einem ausfallsicheren Lösesystem vor.

Der Erfindung liegt die Aufgabe zugrunde, ein Kitesystem vorzustellen, bei dem das Risiko von durch den Kite verursachten Schäden vermindert ist. Ausgehend vom genannten Stand der Technik wird die Aufgabe gelöst mit den Merkmalen des Anspruchs 1. Vorteilhafte Ausführungsformen sind in den Unteransprüchen angegeben.

Bei dem erfindungsgemäßen Kitesystem ist zwischen dem Kite und dem Zugseil eine Sollbruchstelle ausgebildet. Die Sollbruchstelle ist durch eine Fangeinrichtung überbrückt.

Bevor das Zugseil reißt, kommt es zu einem Bruch an der Sollbruchstelle. Mit dem Bruch der Sollbruchstelle verändert sich der aerodynamische Zustand des Kites, was normalerweise mit einer Verminderung der auf das Zugseil einwirkenden Zugkraft einhergeht. Durch die Fangeinrichtung wird verhindert, dass der Kite sich unkontrolliert von dem Zugseil entfernen kann. Der Kite bleibt innerhalb des vorgesehenen Flugraums und kann zu Boden geholt werden, ohne dass es außerhalb des vorgesehenen Flugraums zu einer Gefährdung kommt.

Der Kite kann durch einen Leinenbaum geführt sein. Als Leinenbaum wird eine Mehrzahl von Leinen bezeichnet, die an dem Kite angeschlagen sind und so zusammengeführt sind, dass sie die von dem Kite ausgeübte Zugkraft auf das obere Ende des Zugseils übertragen. Die Sollbruchstelle ist vorzugsweise zwischen dem unteren Ende des Leinenbaums und dem Zugseil angeordnet.

Das untere Ende des Leinenbaums kann an einer Gondel befestigt sein, wobei in der Gondel eine Steuerung für den Kite angeordnet ist. Die Steuerung kann Stellelemente umfassen, mit denen die Länge einzelner Leinen zwischen der Gondel und dem Kite eingestellt werden kann. Durch eine Veränderung der Länge von einer oder mehreren Leinen kann die Bewegungsrichtung des Kites gesteuert werden. Die Steuerung kann so eingerichtet sein, dass der Kite entlang vorgegebener Flugbahnen gesteuert wird. Die Sollbruchstelle ist vorzugsweise zwischen der Gondel und dem Zugseil angeordnet.

Die Sollbruchstelle umfasst ein Element, über das die gesamte von dem Kite ausgeübte Zugkraft geleitet wird. Die Standfestigkeit der Sollbruchstelle gegenüber Zugkräften ist geringer als die Standfestigkeit der übrigen zwischen dem Kite und dem Holepunkt am Boden angeordneten Elemente, die der gesamten Zugkraft des Kites ausgesetzt sind. Insbesondere hat die Sollbruchstelle eine geringere Standfestigkeit gegenüber Zugkräften als das Zugseil. Auf diese Weise kann sichergestellt werden, dass bei Auftreten einer Überlastsituation die Sollbruchstelle bricht, bevor ein anderes Element des Kitesystems die Grenze seiner Belastbarkeit erreicht. Die Überdimensionierung der anderen Elemente des Kitesystems gegenüber der Sollbruchstelle erfolgt unter Berücksichtigung einer angemessenen Sicherheitsreserve.

Die Sollbruchstelle kann einen Scherbolzen umfassen, der bei Einwirkung einer vorgegebenen Zugkraft bricht. Der Scherbolzen kann mit der Richtung der Zugkraft einen rechten Winkel einschließen. Die Sollbruchstelle kann ein erstes Bolzen-Halteelement umfassen, das zwischen dem Scherbolzen und dem Zugseil angeordnet ist. Die Sollbruchstelle kann ein zweites Bolzen-Halteelement umfassen, das zwischen dem Scherbolzen und dem Kite angeordnet ist. Das erste und das zweite Bolzen-Halteelement können konzentrisch zueinander ausgerichtete Bohrungen umfassen. Insbesondere kann das erste Bolzen-Halteelement zwei Bohrungen aufweisen, die die Bohrung des zweiten Bolzen-Halteelements von zwei Seiten umgreifen. Der Scherbolzen kann in die Bohrungen des ersten und des zweiten Bolzen-Halteelements eingesetzt sein. Der Scherbolzen kann eine Schwächung aufweisen, die vorzugsweise am Übergang zwischen dem ersten Bolzen-Halteelement und dem zweiten Bolzen-Halteelement positioniert ist. Diese Schwächung kann den Bereich des Scherbolzens definieren, der bei Einwirken der Überlast abschert.

In einer Ausführungsform der Erfindung ist die Sollbruchstelle einstückig mit dem Zugseil verbunden. Die Sollbruchstelle kann als schwächer dimensionierter Seilabschnitt ausgebildet sein, der in das obere Ende des Zugseils übergeht. Im Bereich zwischen der Sollbruchstelle und dem Holepunkt kann das Zugseil eine konstante Belastbarkeit gegenüber Zugkräften aufweisen. Die schwächer dimensionierte Sollbruchstelle kann mit einem Übergangsabschnitt an die Gondel des Kitesystems angeschlossen sein.

Die Fangeinrichtung, die die Sollbruchstelle überbrückt, ist mit ihrem unteren Ende befestigt an einem zwischen der Sollbruchstelle und dem Holepunkt am Boden angeordneten Abschnitt des Kitesystems. Das obere Ende der Fangeinrichtung kann an einem auf der anderen Seite der Sollbruchstelle liegenden Abschnitt des Kitesystems befestigt sein. Das untere Ende der Fangeinrichtung ist vorzugsweise in einem geringen Abstand zu der Sollbruchstelle angeordnet. Der Abstand zwischen dem unteren Ende der Fangeinrichtung und der Sollbruchstelle ist vorzugsweise kleiner als 10 %, weiter vorzugsweise kleiner als 5 %, weiter vorzugsweise kleiner als 1 % der Länge des Zugseils. Das untere Ende der Fangeinrichtung kann an dem oberen Ende des Zugseils angeschlagen sein. Möglich ist auch, dass das untere Ende der Fangeinrichtung an einer mit dem Zugseil verbundenen Trageeinrichtung für die Sollbruchstelle angeschlagen ist.

Das obere Ende der Fangeinrichtung kann an dem Kite angeschlagen sein. Es kann einen oder mehrere Anlenkpunkte zwischen dem oberen Ende der Fangeinrichtung und dem Kite geben. Der oder die Anlenkpunkte sind vorzugsweise so angeordnet, dass der Kite sich nach dem Brechen der Sollbruchstelle von alleine aus dem Wind dreht, so dass die auf das Zugseil wirkende Zugkraft abnimmt.

Zusätzlich oder alternativ dazu kann das obere Ende der Fangeinrichtung an der Gondel angeschlagen sein. Ist das obere Ende der Fangeinrichtung sowohl an dem Kite als auch an der Gondel angeschlagen, so kann die Fangeinrichtung so bemessen sein, dass die Gondel relativ zu dem Kite schwenken kann, so dass der auf den Kite wirkende Winddruck vermindert wird. Insbesondere kann ein sich zu der Gondel erstreckender Abschnitt der Fangeinrichtung so bemessen sein, dass die Gondel sich nach dem Brechen der Sollbruchstelle über eine größere Strecke bewegen kann als der Kite.

Zusätzlich oder alternativ dazu kann das obere Ende der Fangeinrichtung an einer oder mehreren Leinen des Leinenbaums angeschlagen sein. Durch geeignete Auswahl der Anlenkpunkte zwischen der Fangeinrichtung und den Leinen des Leinenbaums kann erreicht werden, dass der Kite nach dem Brechen der Sollbruchstelle einigermaßen kontrolliert seine Geschwindigkeit vermindert.

Die Fangeinrichtung kann mit einem Ruckdämpfer ausgestattet sein, so dass die Fangeinrichtung nach dem Brechen der Sollbruchstelle nicht schlagartig blockiert, sondern dass die Fangeinrichtung bereits vor der vollständigen Blockade eine Zugkraft aufbaut. Die von der Fangeinrichtung vor dem Blockieren ausgeübte Zugkraft kann sich kontinuierlich erhöhen oder in mehreren Schritten ausgeübt werden. Der Ruckdämpfer kann beispielsweise ein Reibelement oder ein Federelement umfassen.

Zusätzlich oder alternativ zu dem Ruckdämpfer kann die Fangeinrichtung einen Freilaufabschnitt aufweisen, so dass der Kite sich nach dem Brechen der Sollbruchstelle eine vorgegebene Strecke von dem Zugseil entfernen kann, bevor die Zugkraft der Fangeinrichtung eingreift. Nach dem Ende des Freilaufabschnitts kann die Fangeinrichtung beginnen, eine Zugkraft auszuüben. Mit dem Freilaufabschnitt kann der Umstand ausgenutzt werden, dass der Kite nach dem Brechen der Sollbruchstelle seinen aerodynamischen Zustand ändert und dadurch abgebremst wird. Das erste Abbremsen des Kites kann also erfolgen, ohne dass eine Zugkraft auf die Fangleine wirkt.

Der Freilaufabschnitt kann so bemessen sein, dass er wenigstens so groß ist wie die elastische Dehnung des Zugseils. Elastische Dehnung des Zugseils bezeichnet die Strecke, um die sich das Zugseil verkürzt, wenn es nicht mehr unter der Zugkraft des Kites steht. Die elastische Dehnung bezieht sich auf den Zustand, in dem das Zugseil auf maximale Länge gefiert ist. Die elastische Dehnung kann beispielsweise zwischen 2 % und 5 % der Länge des Zugseils liegen. Wenn der Freilaufabschnitt größer ist als die elastische Dehnung des Zugseils, kann das Zugseil sich nach dem Brechen der Sollbruchstelle zusammenziehen, ohne dass die Fangeinrichtung gespannt ist.

Solange die Sollbruchstelle intakt ist, haben das untere Ende der Fangeinrichtung und das am weitesten von dem unteren Ende entfernte obere Ende der Fangeinrichtung einen Anfangsabstand zueinander. Nach dem Brechen der Sollbruchstelle vergrößert sich der Abstand zwischen diesen beiden Punkten der Fangeinrichtung, bis die Fangleine blockiert und die beiden Punkte einen Endabstand zueinander haben. Die Bewegung der beiden Punkte der Fangeinrichtung relativ zueinander zwischen dem Anfangsabstand und dem Endabstand wird als Fangweg bezeichnet.

Der Freilaufabschnitt kann sich über wenigstens 10 %, vorzugsweise wenigstens 20 %, weiter vorzugsweise wenigstens 50 % des Fangwegs erstrecken. Der verbleibende Teil des Fangwegs kann ganz oder teilweise von dem Ruckdämpfer aufgenommen werden.

Die Fangeinrichtung kann eine die Sollbruchstelle überbrückende Fangleine umfassen. Die Fangleine kann entspannt sein, wenn die beiden Enden der Fangeinrichtung den Anfangsabstand zueinander haben. Die Fangleine kann gespannt sein, wenn die beiden Enden der Fangeinrichtung den Endabstand zueinander haben. Der Ruckdämpfer kann auf die Fangleine wirken, so dass eine vorgegebenen Zugkraft zu überwinden ist, um einen Abschnitt der Fangleine in einen gestreckten Zustand zu bringen. Beispielweise kann die Fangleine in sich vernäht sein, wobei die Naht so ausgebildet ist, dass sie nach Überwindung eines vorgegebenen Reißwiderstands reißt.

Das Zugseil kann die einzige Verbindung zwischen der Sollbruchstelle und dem Holepunkt sein, die zur Aufnahme von Zugkräften geeignet ist. Als Holepunkt wird der Befestigungspunkt am Boden bezeichnet, auf den das Zugseil zuläuft. Das erfindungsgemäße Kitesystem kann so ausgelegt sein, dass der Holepunkt auch genutzt wird, um das Zugseil einzuholen. Einholen bedeutet, das Zugseil zwischen dem Holepunkt und dem Kite zu verkürzen, so dass der Kite herangeholt wird.

Das Kitesystem kann eine Energieerzeugungskomponente umfassen, die durch Fieren und Einholen des Zugseils eingebrachte Energie in eine andere Energieform umwandelt. Die in der Energieerzeugungskomponente kann beispielsweise ein Generator sein, mit dem elektrische Energie erzeugt wird. Wenn das Kitesystem auf diese Weise verwendet wird, gibt es regelmäßig einen Abschnitt des Zugseils, der im Bereich des Holepunkts umgelenkt und/oder aufgewickelt wird. Dieser Abschnitt des Zugseils wird in verstärktem Maße belastet. Die Sollbruchstelle und/oder der untere Anlenkpunkt der Fangeinrichtung liegen vorzugsweise außerhalb dieses Abschnitts des Zugseils.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines erfindungsgemäßen Kitesystems;
- Fig. 2:: eine Sollbruchstelle bei einer ersten Ausführungsform der Erfindung;
- Fig. 3:: eine Sollbruchstelle bei einer zweiten Ausführungsform der Erfindung;
- Fig. 4:: eine Fangleine eines erfindungsgemäßen Kitesystems.

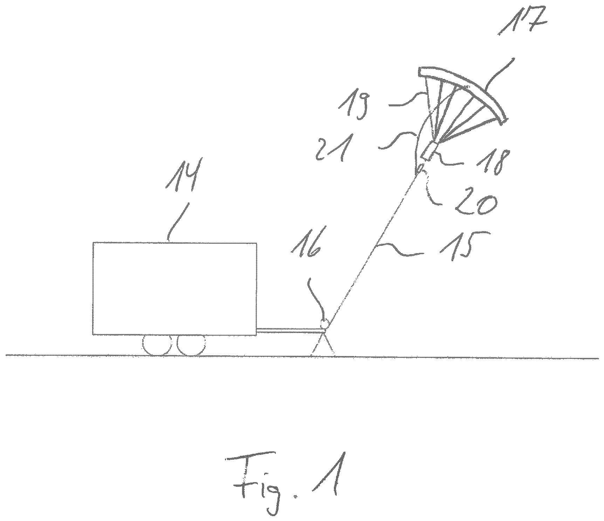

Ein erfindungsgemäßes Kitesystem gemäß Fig. 1 umfasst eine Bodenstation 14 mit einem Holepunkt 16, von dem sich ein Zugseil 15 zu einem Kite 17 erstreckt. An das obere Ende des Zugseils 15 ist eine Gondel 18 angeschlossen, die über einen Leinenbaum 19 mit dem Kite 17 verbunden ist. In der Gondel 18 ist eine Steuerung angeordnet, die dazu ausgelegt ist, die Länge der Leinen des Leinenbaums 19 einzeln oder in Gruppen zu verändern, um den Kite 17 entlang vorgegebener Flugbahnen zu lenken.

Die Bodenstation 14 umfasst einen Generator, an dessen Antriebswelle das Zugseil 15 angeschlossen ist. Wird mit dem Kite 17 eine Zugkraft auf das Zugseil 15 ausgeübt und das Zugseil 15 unter dem Einfluss der Zugkraft über den Holepunkt 16 gefiert, so kann der Generator angetrieben werden und elektrische Energie erzeugt werden. Die elektrische Energie kann beispielsweise in ein elektrisches Anschlussnetz eingespeist werden.

Zwischen der Gondel 18 und dem Holepunkt 16 ist eine Sollbruchstelle 20 ausgebildet. Die Sollbruchstelle 20 ist mit geringem Abstand zu der Gondel 18 und mit großem Abstand zu dem Holepunkt 16 angeordnet, so dass das Zugseil 15 weit eingeholt werden kann, ohne dass die Sollbruchstelle 20 in den Holepunkt 16 läuft.

Das Zugseil 15 hat eine größere Beständigkeit gegenüber Zugkräften als die Sollbruchstelle 20. Im Fall einer Zugkraft-Überlastung kommt es zu einem Bruch der Sollbruchstelle 20, bevor das Zugseil 15 oder andere Komponenten des Kitesystems Schaden nehmen.

Die Sollbruchstelle 20 ist mit einer Fangleine 21 überbrückt, die eine Fangeinrichtung im Sinne der Erfindung bildet. Durch die Fangleine 21 wird bewirkt, dass der Kite 17 auch nach einem Bruch der Sollbruchstelle 20 nicht ungehindert davon fliegen kann, sondern innerhalb des vorbestimmten Flugbereichs bleibt. Das untere Ende der Fangleine 21 ist mit geringem Abstand zu der Sollbruchstelle 20 an dem Zugseil 15 angeschlagen. Das obere Ende der Fangleine 21 ist an dem Kite 17 angeschlagen.

Kommt es zu einem Bruch der Sollbruchstelle 20, so kann der Kite 17 sich zunächst ein Stück weit von dem Zugseil 15 entfernen, bevor die Fangleine 21 beginnt, eine Zugkraft auszuüben. Die Phase, in der die Sollbruchstelle 20 gebrochen ist, die Fangleine 21 aber noch keine Zugkraft ausübt, wird als Freilaufphase bezeichnet. Anschließend beginnt die Fangleine 21, über einen Ruckdämpfer, dessen Funktionsweise unten näher erläutert wird, eine Zugkraft auf den Kite 17 auszuüben, um den Kite 17 sanft abzubremsen. Nach Erschöpfung des Ruckdämpfers ist die Fangleine 21 gespannt, so dass der Kite 17 sich nicht mehr weiter von dem Zugseil 15 entfernen kann. In diesem Zustand haben die beiden Enden der Fangleine 21 ihren maximalen Abstand zueinander, der als Endabstand bezeichnet wird.

Das Kitesystem ist so ausgelegt, dass der Kite 17 bei Erreichen des Endabstands hinreichend abgebremst ist, so dass er ohne weitere Schäden eingeholt werden kann.

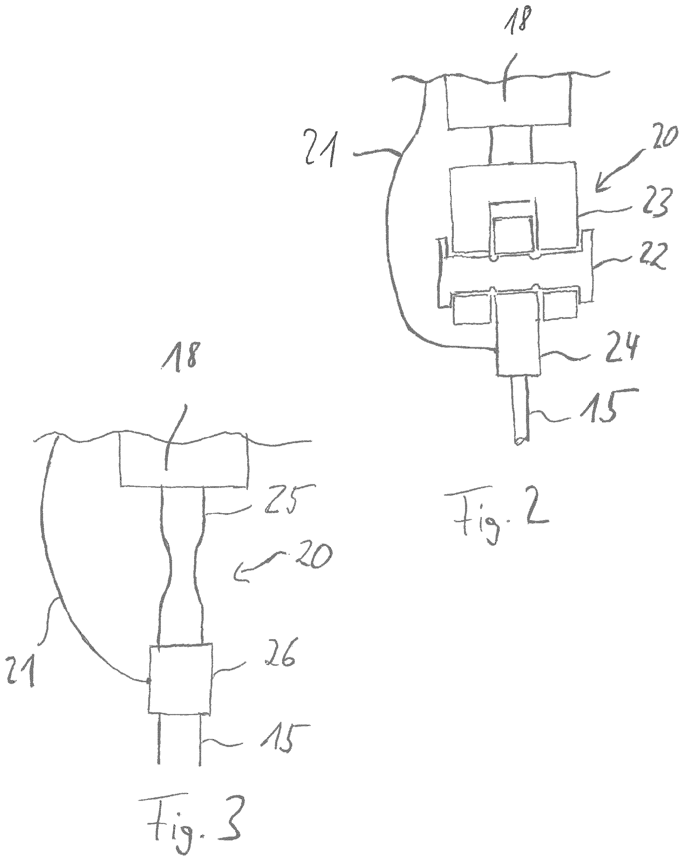

In Fig. 2 ist ein Ausführungsbeispiel einer Sollbruchstelle 20 gezeigt, die zwischen dem oberen Ende des Zugseils 15 und der Gondel 18 angeordnet ist. Die Sollbruchstelle 20 umfasst einen Scherbolzen 22, der ein erstes Bolzen-Halteelement 23 und ein zweites Bolzen-Halteelement 24 miteinander verbindet. Das erste Bolzen-Halteelement 23 ist an die Gondel 18 angeschlossen. Das zweite Bolzen-Halteelement 24 schließt an das obere Ende des Zugseils 15 an. Das erste Bolzen-Halteelement 23 umgreift das zweite Bolzen-Halteelement 24 von zwei Seiten, so dass eine in dem ersten Bolzen-Halteelement 23 ausgebildete Bohrung mit einer Bohrung in dem zweiten Bolzen-Halteelement 24 fluchtet. Der Scherbolzen 22 ist in die Bohrung eingeführt und hat am Übergang zwischen dem ersten Bolzen-Halteelement 23 und dem zweiten Bolzen-Halteelement 24 eine Schwächung. Im Bereich dieser Schwächung schert der Scherbolzen 22 bei Überschreiten einer definierten Zugkraft ab.

In einer alternativen Ausführungsform der Erfindung ist die Sollbruchstelle 20 gemäß Fig. 3 einstückig mit dem Zugseil 15 verbunden. Im Bereich der Sollbruchstelle 20 ist der Querschnitt verglichen mit dem Rest des Zugseils 15 vermindert. Mit einem Übergangsabschnitt 25 ist die Sollbruchstelle 20 an die Gondel 18 angeschlossen. Am oberen Ende des Zugseils 15 ist eine Manschette 26 angeordnet, die sich um das Zugseil 15 herum erstreckt. An der Manschette 26 ist das untere Ende der Fangleine 21 befestigt.

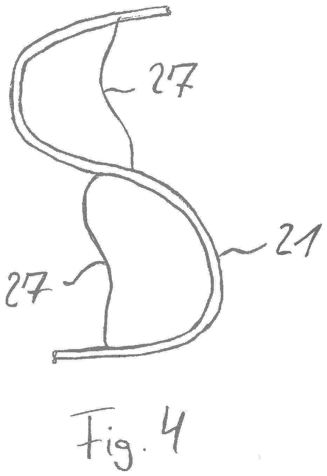

Gemäß Fig. 4 erstreckt die Fangleine 21 sich entlang einem geschwungenen Weg, solange die Sollbruchstelle 20 intakt ist. Benachbarte Windungen der Fangleine 21 sind durch Verbindungsstücke 27 miteinander verbunden, die kürzer sind als der Fangleinenabschnitt, an dessen Enden die Verbindungsstücke befestigt sind.

Kommt es zu einem Bruch der Sollbruchstelle 20, so zieht der Kite 17 an dem oberen Ende der Fangleine 21. Die Fangleine 21 setzt diesem Zug so lange keinen Widerstand entgegen, bis alle Verbindungsstücke 27 gespannt sind. Bei Überschreiten einer vorgegebenen Zugkraft, die kleiner ist als die von dem Kite 17 ausgeübte Zugkraft, reißen die Verbindungsstücke 27. Mit der weiteren Bewegung des Kites 17 werden die Verbindungsstücke 27 nacheinander zerrissen, bis schließlich die Fangleine 21 auf ihre maximale Länge gedehnt ist, so dass eine weitere Bewegung des Kites 17 in Zugrichtung verhindert wird. Die Verbindungsstücke 27 bilden in ihrer Gesamtheit einen Ruckdämpfer, durch den die Bewegung des Kites 17 immer weiter abgebremst wird.

Das Kitesystem ist so eingerichtet, dass der Kite 17 hinreichend abgebremst ist, wenn die Fangleine 21 voll gespannt ist. In diesem Zustand kann der Kite 17 zusammen mit der Gondel 18 eingeholt werden, ohne dass es zu weiteren Schäden kommt.

## Patentansprüche

1. Kitesystem mit einem Kite (17) und mit einem Zugseil (15), wobei das Zugseil (15) sich zwischen dem Kite (17) und einem Holepunkt (16) am Boden erstreckt, wobei zwischen dem Kite (17) und dem Zugseil (15) eine Sollbruchstelle (20) ausgebildet ist, **dadurch gekennzeichnet, dass** die Sollbruchstelle (20) durch eine Fangeinrichtung (21) überbrückt ist.

2. Kitesystem nach Anspruch 1, **dadurch gekennzeichnet, dass** die Sollbruchstelle (20) zwischen einem Leinenbaum (19) des Kites (17) und dem Zugseil (15) angeordnet ist.

3. Kitesystem nach Anspruch 1 oder 2, **dadurch gekennzeichnet, dass** die Sollbruchstelle (20) zwischen einer Gondel (18) des Kitesystems und dem Zugseil (15) angeordnet ist.

4. Kitesystem nach einem der Ansprüche 1 bis 3, **dadurch gekennzeichnet, dass** die Sollbruchstelle (20) einen Scherbolzen (22) umfasst.

5. Kitesystem nach Anspruch 4, **dadurch gekennzeichnet, dass** der Scherbolzen (22) eine Schwächung aufweist, die an einem Übergang zwischen einem ersten Bolzen-Halteelement (23) und einem zweiten Bolzen-Halteelement (24) angeordnet ist.

6. Kitesystem nach einem der Ansprüche 1 bis 3, **dadurch gekennzeichnet, dass** die Sollbruchstellen (20) einstückig mit dem Zugseil (15) verbunden ist.

7. Kitesystem nach einem der Ansprüche 1 bis 6, **dadurch gekennzeichnet, dass** der Abstand zwischen dem unteren Ende der Fangeinrichtung (21) und der Sollbruchstelle (20) kleiner ist als 10 %, vorzugsweise kleiner ist als 5 %, weiter vorzugsweise kleiner ist als 1 % der Länge des Zugseils (15).

8. Kitesystem nach einem der Ansprüche 1 bis 7, **dadurch gekennzeichnet, dass** das obere Ende der Fangeinrichtung (21) an dem Kite (17), an dem Leinenbaum (19) und/oder an der Gondel (18) angeschlagen ist.

9. Kitesystem nach einem der Ansprüche 1 bis 8, **dadurch gekennzeichnet, dass** die Fangeinrichtung (21) mit einem Ruckdämpfer (27) ausgestattet ist.

10. Kitesystem nach einem der Ansprüche 1 bis 9, **dadurch gekennzeichnet, dass** die Fangeinrichtung (21) einen Freilaufabschnitt aufweist, so dass der Kite (17) sich nach dem Brechen der Sollbruchstelle (20) eine vorgegebene Strecke von dem Zugseil (15) entfernen kann, bevor eine Zugkraft der Fangeinrichtung (21) eingreift.

11. Kitesystem nach einem der Ansprüche 1 bis 10, **dadurch gekennzeichnet, dass** der Freilaufabschnitt kann sich über wenigstens 10 %, vorzugsweise wenigstens 20 %, weiter vorzugsweise wenigstens 50 % des Fangwegs erstreckt.

12. Kitesystem nach einem der Ansprüche 1 bis 11, **dadurch gekennzeichnet, dass** die Fangeinrichtung (21) eine die Sollbruchstelle (20) überbrückende Fangleine umfasst.

13. Kitesystem nach Anspruch 12, soweit zurückgezogen auf Anspruch 9, **dadurch gekennzeichnet, dass** der Ruckdämpfer (27) auf die Fangleine (21) wirkt, so dass eine vorgegebenen Zugkraft zu überwinden ist, um einen Abschnitt der Fangleine (21) in einen gestreckten Zustand zu bringen.

## Claims

1. Kite system having a kite (17) and a tether (15), wherein the tether (15) extends between the kite (17) and a tow point (16) on the ground, wherein a predetermined breaking point (20) is formed between the kite (17) and the tether (15), **characterized in that** a catching device (21) bridges the predetermined breaking point (20).

2. Kite system according to Claim 1, **characterized in that** the predetermined breaking point (20) is arranged between a line tree (19) of the kite (17) and the tether (15) .

3. Kite system according to Claim 1 or 2, **characterized in that** the predetermined breaking point (20) is arranged between a control pod (18) of the kite system and the tether (15).

4. Kite system according to one of Claims 1 to 3, **characterized in that** the predetermined breaking point (20) comprises a shear bolt (22).

5. Kite system according to Claim 4, **characterized in that** the shear bolt (22) has a weakening arranged at a transition between a first bolt-retaining element (23) and a second bolt-retaining element (24).

6. Kite system according to one of Claims 1 to 3, **characterized in that** the predetermined breaking point (20) is connected in one piece to the tether (15).

7. Kite system according to one of Claims 1 to 6, **characterized in that** the distance between the lower end of the catching device (21) and the predetermined breaking point (20) is smaller than 10%, preferably smaller than 5%, further preferably smaller than 1%, of the length of the tether (15).

8. Kite system according to one of Claims 1 to 7, **characterized in that** the upper end of the catching device (21) is attached to the kite (17), to the line tree (19) and/or to the control pod (18).

9. Kite system according to one of Claims 1 to 8, **characterized in that** the catching device (21) is fitted with a shock damper (27).

10. Kite system according to one of Claims 1 to 9, **characterized in that** the catching device (21) has a free-running portion, so that, once the predetermined breaking point (20) has ruptured, the kite (17) can move away from the tether (15) by a predefined amount before a tensile force of the catching device (21) takes effect.

11. Kite system according to one of Claims 1 to 10, **characterized in that** the free-running portion can extend over at least 10%, preferably at least 20%, further preferably at least 50%, of the catching distance.

12. Kite system according to one of Claims 1 to 11, **characterized in that** the catching device (21) comprises a catching line which bridges the predetermined breaking point (20).

13. Kite system according to Claim 12, if related back to Claim 9, **characterized in that** the shock damper (27) acts on the catching line (21), so that a predefined tensile force has to be overcome in order to move a portion of the catching line (21) into a straightenedout state.

## Revendications

1. Système à cerf-volant comprenant un cerf-volant (17) et un câble de traction (15), le câble de traction (15) s'étendant entre le cerf-volant (17) et un trou (16) au sol, un point de rupture cible (20) étant formé entre le cerf-volant (17) et le câble de traction (15), **caractérisé en ce que** le point de rupture cible (20) est ponté par un dispositif de sûreté (21).

2. Système à cerf-volant selon la revendication 1, **caractérisé en ce que** le point de rupture cible (20) est disposé entre un ensemble de suspentes (19) du cerf-volant (17) et le câble de traction (15).

3. Système à cerf-volant selon la revendication 1 ou 2, **caractérisé en ce que** le point de rupture cible (20) est disposé entre une nacelle (18) du système à cerf-volant et le câble de traction (15).

4. Système à cerf-volant selon l'une des revendications 1 à 3, **caractérisé en ce que** le point de rupture cible (20) comprend un boulon de cisaillement (22) .

5. Système à cerf-volant selon la revendication 4, **caractérisé en ce que** le boulon de cisaillement (22) présente un affaiblissement qui est disposé à une transition entre un premier élément de retenue de boulon (23) et un deuxième élément de retenue de boulon (24) .

6. Système à cerf-volant selon l'une des revendications 1 à 3, **caractérisé en ce que** les points de rupture cibles (20) sont reliés d'une seule pièce au câble de traction (15).

7. Système à cerf-volant selon l'une des revendications 1 à 6, **caractérisé en ce que** la distance entre l'extrémité inférieure du dispositif de sûreté (21) et le point de rupture cible (20) est inférieure à 10 %, de préférence inférieure à 5 %, plus préférablement moins de 1 %, de la longueur du câble de traction (15).

8. Système à cerf-volant selon l'une des revendications 1 à 7, **caractérisé en ce que** l'extrémité supérieure du dispositif de sûreté (21) est fixée au cerf-volant (17), à l'ensemble de suspentes (19) et/ou à la nacelle (18).

9. Système à cerf-volant selon l'une des revendications 1 à 8, **caractérisé en ce que** le dispositif de sûreté (21) est équipé d'un amortisseur de chocs (27).

10. Système à cerf-volant selon l'une des revendications 1 à 9, **caractérisé en ce que** le dispositif de sûreté (21) comporte une portion de défilement libre de sorte que le cerf-volant (17) s'éloigne du câble de traction (15) sur une distance spécifiée après la rupture du point de rupture cible (2 0) avant intervention d'une force de traction du dispositif de sûreté (21).

11. Système à cerf-volant selon l'une des revendications 1 à 10, **caractérisé en ce que** la portion de défilement libre peut s'étendre sur au moins 10 %, de préférence au moins 20 %, plus préférablement au moins 50 %, de la trajectoire de sûreté.

12. Système à cerf-volant selon l'une des revendications 1 à 11, **caractérisé en ce que** le dispositif de sûreté (21) comprend une suspente de sûreté pontant le point de rupture cible (20).

13. Système à cerf-volant selon la revendication 12, dans la mesure où elle renvoie à la revendication 9, **caractérisé en ce que** l'amortisseur de chocs (27) agit sur la suspente de sûreté (21) de sorte qu'une force de traction spécifiée doit être surmontée pour amener une portion de la suspente de sûreté (21) dans un état étiré.
